# EUROPEAN PATENT SPECIFICATION

(11) **EP 1 666 721 B1**
(45) Date of publication and mention of the grant of the patent: **18.01.2012**
(21) Application number: 04788074.5
(22) Date of filing: 24.09.2004
(51) Int. Cl.: F02N 3/04, B62M 7/02, B62K 11/00

(54) **INTERNAL COMBUSTION ENGINE**
VERBRENNUNGSMOTOR
MOTEUR A COMBUSTION INTERNE

(30) Priority: 26.09.2003 JP 2003336016
(43) Date of publication of application: 07.06.2006
(73) Proprietor: HONDA MOTOR CO., LTD., Tokyo 107-8556 (JP)
(72) Inventor: SAWAMURA, Yoshinobu, Wako-shi, Saitama 3510193 (JP); TSUBAKINO, Yukihiro, Wako-shi, Saitama 3510193 (JP); KUROIWA, Yasuyuki, Wako-shi, Saitama 3510193 (JP); KIHARA, Teruo, Wako-shi, Saitama 3510193 (JP)
(74) Representative: Herzog, Markus
(86) International application number: PCT/JP2004/013915
(87) International publication number: WO 2005/031156

(56) References cited:
- FR-A1- 2 776 578
- JP-A- 3 009 068
- JP-A- 4 008 865
- JP-A- 03 009 068
- JP-A- 04 008 865
- JP-A- 11 280 623
- JP-A- 2000 120 511
- US-A- 2 930 259
- US-B1- 6 247 439

## Description

### TECHNICAL FIELD

The present invention relates to an internal combustion engine provided with a kick-type starter.

### BACKGROUND ART

There has been known an internal combustion engine provided with a kick-type starter inside a case of a power transmission mechanism for transmitting power from the crankshaft to the output shaft (see, for example, Patent Document 1 and 2). The configuration in this type of internal combustion engine involves a problem in that the degree of freedom in layout of the kick-type starter is limited, due to the need for avoiding the interference of the kick-type starter with the power transmission mechanism.

In this type of the engine, there is also a problem in that, upon change to a specification in which the kick-type starter is removed, an unnecessary space is generated inside the case, so that the internal combustion engine as a whole cannot be made compact, notwithstanding the removal of the kick-type starter.

### [Patent Document 1]

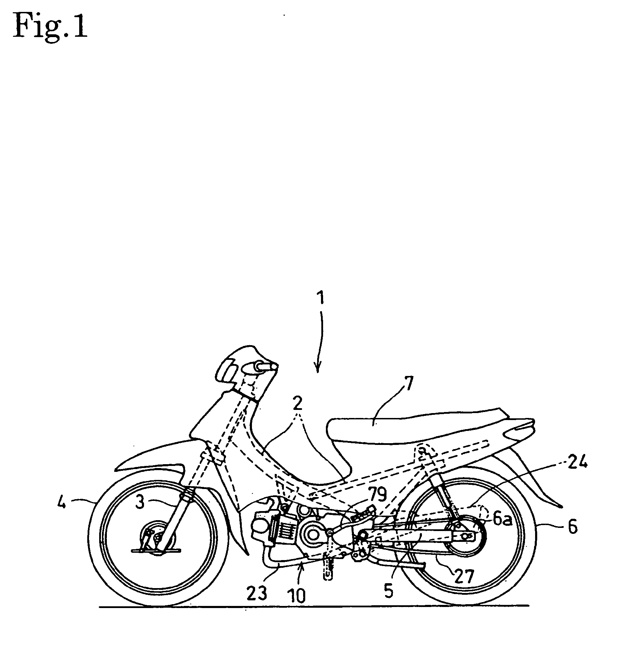

JP 8-177690 A (Fig. 1) [Patent Document 2] US2930259

### DISCLOSURE OF THE INVENTION

### Underlying Problems to be solved by the Invention

An object of the present invention is to propose a layout and a configuration of a kick-type starter of an internal combustion engine that makes it possible to freely lay out the position of the kick-type starter. Another object of the present invention is to propose a layout and a configuration of a kick-type starter ensuring that an unnecessary space is not left inside the case of the power transmission mechanism, upon change to a specification in which the kick-type starter is removed.

### Means for solving the Underlying Problems

In order to attain the above objects, the present invention provides an internal combustion engine comprising a crankshaft rotatably supported in a crankcase, an output shaft, a power transmission mechanism for transmitting power from the crankshaft to the output shaft, a crankcase cover for covering a part of the power transmission mechanism and accessories fixed to the crankshaft, and a kick-type starter connected to the crankshaft for transmission of rotational torque to the crankshaft to rotate the same when the engine is to be started, characterized in that: the kick-type starter is supported on an outside of the crankcase cover.

A kick-type starter cover is removably fixed to an outer surface of the crankcase cover, and a kick shaft to be rotated by a kick arm is rotatably supported by and between the kick-type starter cover and the crankcase cover.

The kick-type starter cover supports therein a rotation transmitting mechanism for transmitting the rotation of the kick shaft, and a ratchet shaft to be rotated by the kick shaft through the rotation transmitting mechanism, and the ratchet shaft may be provided to transmit rotation thereof to the crankshaft.

Typically, the internal combustion engine is mounted on a motorcycle, and the kick-type starter is provided at such a position that, as viewed sidewise with respect to the motorcycle, the kick-type starter overlaps partly with a rear cover of the internal combustion engine for covering a front portion of a chain connecting the output shaft of the internal combustion engine and a rear wheel of the motorcycle to each other and for covering a drive sprocket of the output shaft.

A torque converter may be provided on one end of the crankshaft, and the kick-type starter may be provided on the side opposite the one end of the torque converter.

### EFFECT OF THE INVENTION

According to the present, the kick-type starter is provided on the outside of the crankcase cover, which ensures that the kick-type starter does not interfere with the accessories and the power transmission mechanism located inside the crankcase cover, and the kick-type starter can be freely disposed at such a position as to permit easy operation thereof by the driver. In addition, when the kick-type starter is removed for a change in specifications, it is possible to cope with the change by only changing the shape of the crankcase cover, so that a portion or portions to be changed due to the change in specifications can be minimized. Besides, no surplus space is left in the internal combustion engine. Therefore, the internal combustion engine can be made compact, as contrasted to the case where a kick-type starter is provided in the gear chamber of the power transmission mechanism inside the crankcase.

The degree of freedom of the layout of the kick-type starter can be further improved, if the internal combustion engine is mounted on a motorcycle, and the kick-type starter is provided at such a position that, as viewed sidewise with respect to the motorcycle, the kick-type starter overlaps partly with a rear cover of the internal combustion engine for covering a front portion of a chain connecting the output shaft of the internal combustion engine and a rear wheel of the motorcycle to each other and for covering a drive sprocket of the output shaft.

The left-right balance of the internal combustion engine can be made favorable if the torque converter and the kick-type starter are arranged on the opposite side in the left-right direction of a motorcycle.

### BRIEF DESCRIPTION OF THE DRAWINGS

[Fig. 1]
   Fig. 1 is a side view of a motorcycle on which an internal combustion engine according to one embodiment of the present invention is mounted.
[Fig. 2]

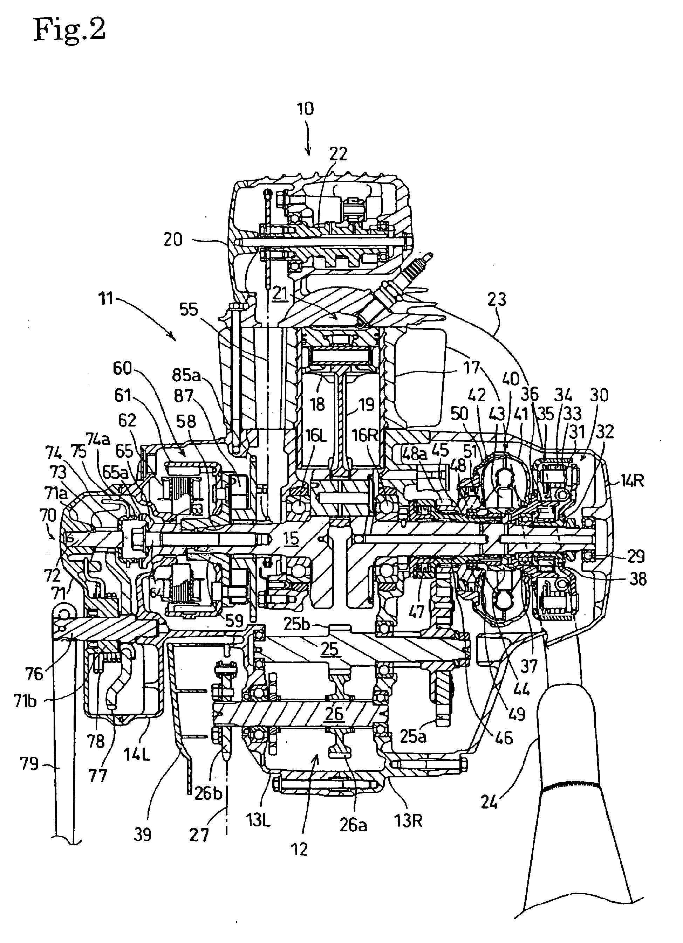

   Fig. 2 is a longitudinal sectional view of the internal combustion engine.
[Fig. 3]

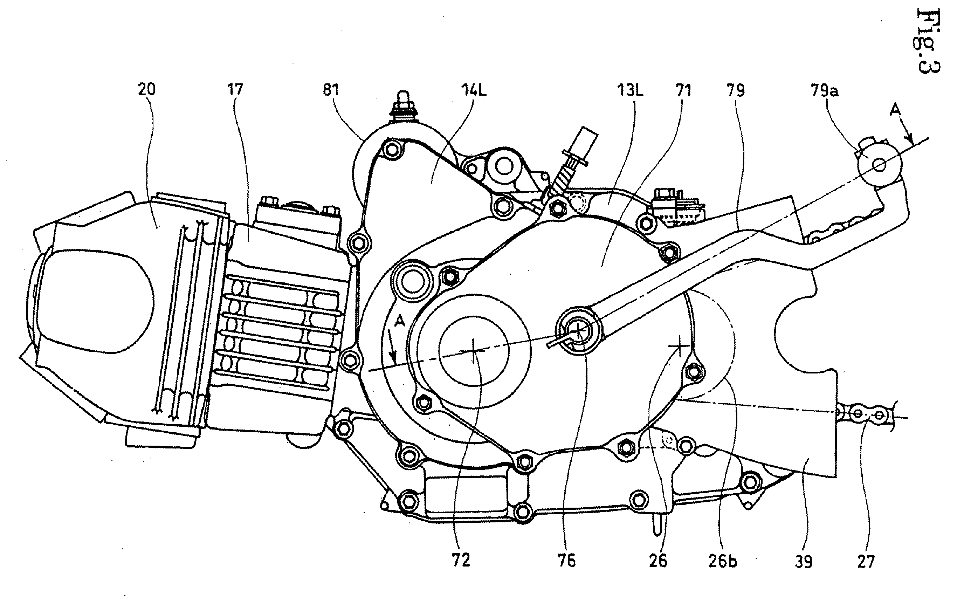

   Fig. 3 is an outlook side view, as viewed from the left side, of the internal combustion engine.
[Fig. 4]

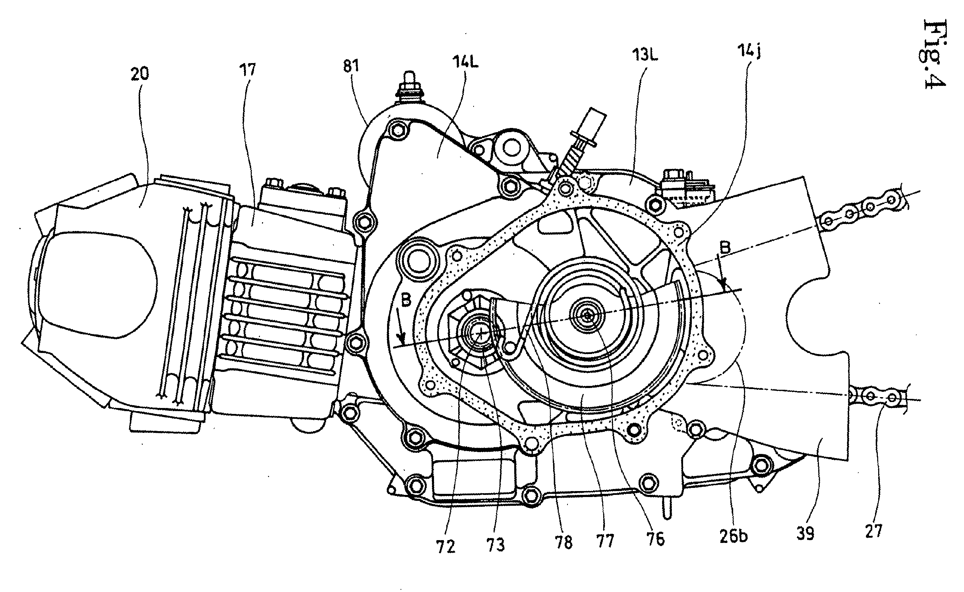

   Fig. 4 is a side view, as viewed from the left side, of the internal combustion engine in the condition where internal devices of a kick-type starter can be seen.
[Fig. 5]

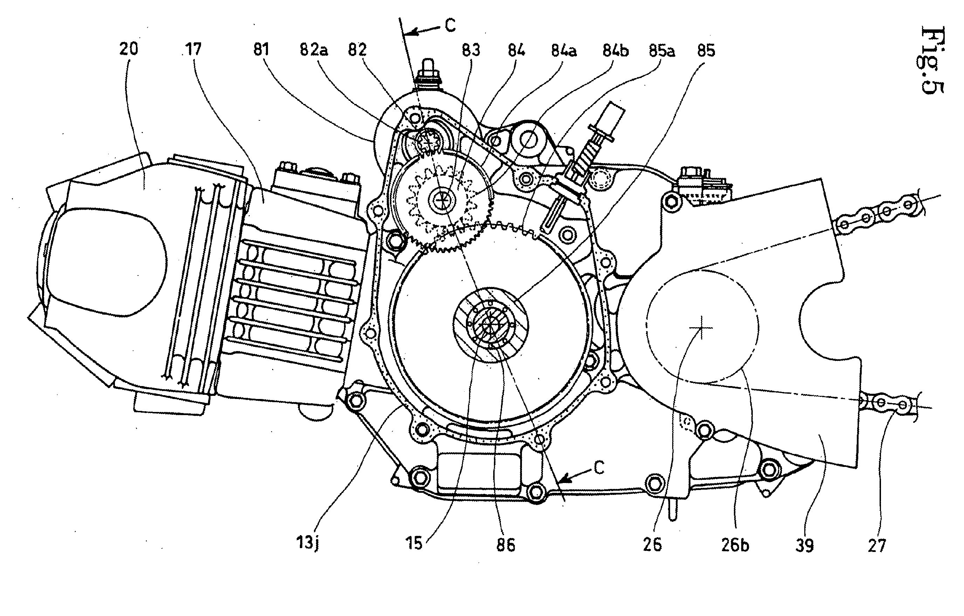

   Fig. 5 is a side view, as viewed from the left side, of the internal combustion engine in the condition where a power transmission mechanism of a cell-type starter can be seen.
[Fig. 6]

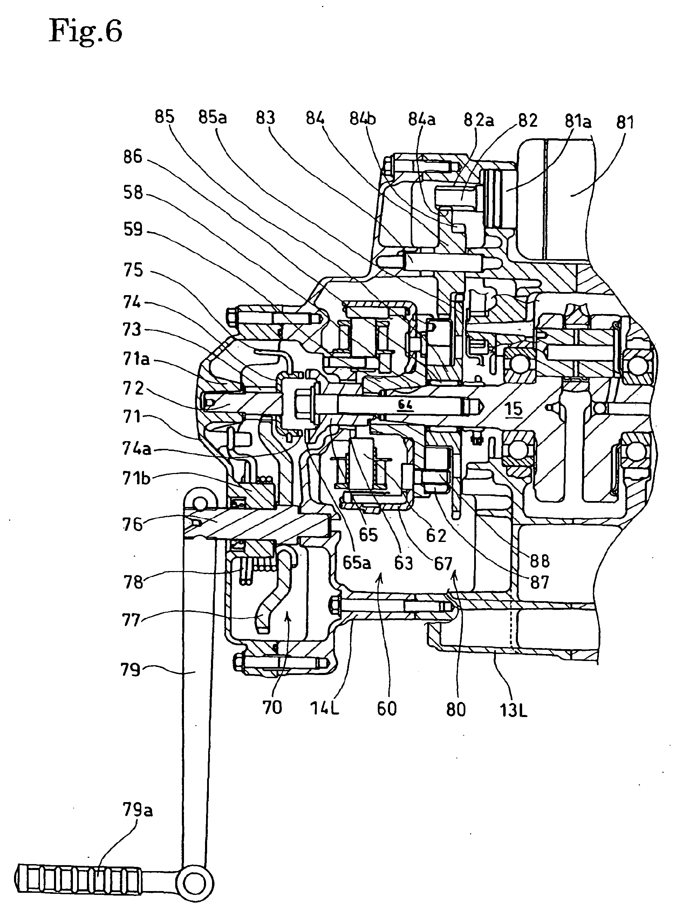

   Fig. 6 shows a power transmission mechanism for transmitting power from the kick-type starter and from the cell-type starter to a crankshaft.
[Fig. 7]

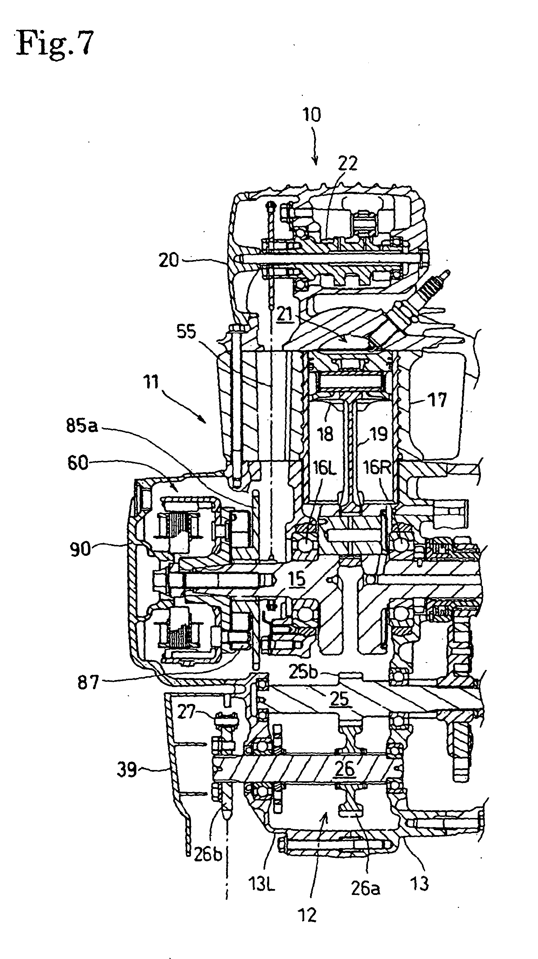

   Fig. 7 is a longitudinal sectional view showing a state in which the kick-type starter is removed.

### DESCRIPTION OF REFERENCE SIGNS

1... Motorcycle; 2... Vehicle body frame; 3... Front fork; 5... Rear fork; 6... Rear wheel; 6a... Rear wheel chain driven sprocket; 7... Seat; 10... Internal combustion engine; 11... Power generating mechanism; 12... Power transmission mechanism; 13L... Left crankcase; 13R... Right crankcase; 13j... Mating surface; 14L... Left crankcase cover; 14R... Right crankcase cover; 14j... Mating surface; 15... Crankshaft; 16L and 16R... Bearing; 17... Cylinder block; 18... Piston; 19... Connecting rod; 20... Cylinder head; 21... Combustion chamber; 22... Camshaft; 23... Exhaust pipe; 24... Muffler; 25... Input shaft; 25a... Primary speed-reduction driven gear; 25b... Drive gear (between input shaft and output shaft); 26... Output shaft; 26a... Driven gear (between input shaft and output shaft); 26b... Rear wheel chain drive sprocket ; 27... Rear wheel drive chain; 29... Bearing at crankshaft end portion; 30... Centrifugal clutch; 31... Clutch inner member; 32... Inner boss portion; 33... Support shaft; 34... Clutch weight; 35... Clutch outer member; 36... Outer boss portion; 37... Bearing; 38... One-way clutch; 39... Rear cover; 40... Torque converter; 41... Pump impeller; 42... Turbine impeller; 43... Stator impeller; 44... Stator boss portion; 45... Stator shaft; 46... Bearing; 47... Flywheel; 48... Turbine shaft; 48a... Primary speed-reduction drive gear; 49... Bearing; 50... Side cover; 51... Flywheel; 55... Cam chain; 56... Cam chain drive sprocket; 58... Key; 59... Holding member; 60... AC generator; 61... Outer rotor; 62... Inner stator; 63... Opening in left crankcase cover 14L; 64... Bolt; 65... Boss member; 65a... Ratchet teeth; 70... Kick-type starter; 71... Kick-type starter cover; 71a... Hollow cylindrical support portion; 71b... Kick shaft bearing boss portion; 72... Ratchet shaft; 73... Driven helical gear; 74... Ratchet wheel; 74a... Ratchet teeth; 75... Frictional spring; 76... Kick shaft; 77... Drive helical gear; 78... Return spring; 79... Kick arm; 79a... Kick pedal; 80... Cell-type starter; 81... Cell motor; 81a... Small diameter portion of cell motor; 82... Motor rotary shaft; 82a... Pinion on motor rotary shaft; 83... Intermediate shaft; 84... Double gear; 84a... Large diameter gear; 84b... Small diameter gear; 85... Hollow cylindrical boss; 85a... Large diameter gear; 86... Roller bearing; 87... One-way clutch; 88... Bolt; 90... Left crankcase cover for exclusive use in the case of removing kick-type starter.

### BEST MODE FOR CARRYING OUT THE INVENTION

Fig. 1 shows a side view of a motorcycle 1 on which an internal combustion engine 10 according to one embodiment of the present invention is mounted. The motorcycle 1 has a structure in which the internal combustion engine 10 is suspended at the center of a vehicle body frame 2, a front wheel 4 is rotatably supported on a front fork 3 turnably supported on a front portion of the vehicle body frame 2, and a rear wheel 6 is rotatably supported on a rear fork 5. The front end of the rear fork 5 is pivotally supported on the internal combustion engine 10 and extends rearwards. The upper side of the rear wheel 6 is covered with a seat 7.

Fig. 2 shows a sectional view of the internal combustion engine 10 taken along a cylinder centerline, a crankshaft, an input shaft, and an output shaft. Herein, "right" and "left" mean right" and "left", respectively, with respect to a motorcycle on which the internal combustion engine 10 is mounted. The internal combustion engine 10 is composed of a power generating mechanism 11 and a power transmission mechanism 12 integrated with each other. A crank chamber and a gear chamber are formed in a space formed by coupling together a left crankcase half 13L and a right crankcase half 13R constituting left and right halves of a crankcase. A crankshaft 15 is disposed to be oriented in the left-right direction of the vehicle and is borne on the left and right crankcase halves 13L and 13R through bearings 16L and 16R, respectively.

In the power generating mechanism 11, a piston 18 and the crankshaft 15 are connected to each other through a connecting rod 19. The piston 18 is slidably fitted in the bore of a cylinder block 17 connected to the crankcase halves 13L and 13R. A cylinder head 20 joined to the cylinder block 17 defines a combustion chamber 21 between the cylinder head 20 and the top face of the piston 18. The cylinder head 20 includes intake and exhaust valves (not shown) for opening and closing intake and exhaust ports, which are communicated with the combustion chamber 21. A camshaft 22 for driving the intake and exhaust valves is rotatably supported in the cylinder head 20 in parallel to the crankshaft 15. An exhaust pipe 23 and a muffler 24 are connected to the exhaust port.

In the power transmission mechanism 12, an input shaft 25 and an output shaft 26 are disposed in parallel to the crankshaft 15 and rotatably supported in the left and right crankcase halves 13L and 13R. On an end portion, projecting rightwards from the right crankcase half 13R, of the input shaft 25A is fixedly fitted a primary speed-reduction driven gear 25a. The input shaft 25 is provided with a drive gear 25b on the inner sides of the left and right crankcase halves 13L and 13R. A driven gear 26a to be meshed with the drive gear 25b is fitted on the output shaft 26 at the inner sides of the left and right crankcase halves 13L and 13R. A rear wheel chain drive sprocket 26b is fitted over an end portion, projecting to the left outer side from the left crankcase half 13L, of the output shaft 26. A rear wheel drive chain 27 is set between the rear wheel chain drive sprocket 26b and a rear wheel chain driven sprocket 6a (see Fig. 1) fixedly provided on the rear wheel 6, to constitute a final speed-reduction mechanism. A front portion of the rear wheel drive chain 27 and the rear wheel chain drive sprocket 26b for driving the chain are covered with a rear cover 39 of the internal combustion engine.

A centrifugal clutch 30, a torque converter 40 and a primary speed-reduction drive gear 48a are disposed, in this order from the right end toward the inner side, on a right side portion of the crankshaft 15, projecting rightwards from the right crankcase half 13R. The primary speed-reduction drive gear 48a is meshed with the primary speed-reduction driven gear 25a of the power transmission mechanism 12. A primary speed-reduction mechanism is composed of the primary speed-reduction drive gear 48a and the primary speed-reduction driven gear 25a. A right crankcase cover 14R for covering the primary speed-reduction mechanism, the centrifugal clutch 30, and the torque converter 40 from the right side is joined to the right end surface of the right crankcase half 13R. An end portion of the crankshaft 15 is rotatably supported through a bearing 29 on the right crankcase cover 14R.

The centrifugal clutch 30 is formed in such a manner that an inner boss portion 32 thereof for holding the base end of a clutch inner member 31 is spline-fitted over a right end portion of the crankshaft 15. Further, clutch weights 34 are tiltably supported respectively on a plurality of support shafts 33 projecting on the outer circumferential portion of the clutch inner member 31 in parallel to the crankshaft 15. A clutch outer member 35 has a hollow cylindrical portion that covers the clutch weights 34 with the inner circumferential surface of the cylindrical portion facing the clutch weights 34. An outer boss portion 36 for holding the base end of the clutch outer member 35 is turnably supported on the crankshaft 15 through a bearing 37. The outer boss portion 36 is supported relative to the inner boss portion 32 through a one-way clutch 38. The one-way clutch 38 can transmit rotational torque from the side of the clutch outer member 35 to the side of the clutch inner member 31.

In response to the rotation of the crankshaft 15, the clutch inner member 31 is rotated as one body with the crankshaft 15, but the rotational torque is not transmitted from the side of the clutch inner member 31 to the clutch outer member 35, due to the presence of the one-way clutch 38 therebetween. When the rotational speed of the crankshaft 15 exceeds a predetermined speed, the inclination of the clutch weights 34 increases, whereby the clutch weights 34 acts on the clutch outer member 35, so that the clutch is engaged to rotate the clutch outer member 35.

The torque converter 40 is disposed adjacently to the centrifugal clutch 30 and composed of a pump impeller 41, a turbine impeller 42 opposed to the pump impeller 41, and a stator impeller 43 disposed between the impellers 41 and 42. The pump impeller 41 is integrally connected to the outer boss portion 36 holding the base end of the clutch outer member 35.

A stator boss portion 44 holds the base end of the stator impeller 43 and is splin-fitted over a hollow cylindrical stator shaft 45. The stator shaft 45 is rotatably supported on the crankshaft 15 through a bearing 46 and supported relative to the right crankcase half 13R through a free wheel 47. The stator impeller 43 can be rotated in one direction as one body with the stator shaft 45.

A hollow cylindrical turbine shaft 48 holds the base end of the turbine impeller 42 and is rotatably supported on the stator shaft 45 through a bearing 49, and the turbine shaft 48 is provided with the above-mentioned primary speed-reduction drive gear 48a at a left end portion thereof.

A side cover 50 for covering the backside of the turbine impeller 42 is integrally connected to the pump impeller 41, and a back load transmitting free wheel 51 is interposed between the side cover 50 and the turbine shaft 48.

When the rotational speed of the crankshaft 15 exceeds a predetermined speed, the centrifugal clutch 30 is engaged so as to rotate the pump impeller 41 together with the clutch outer member 35. With the rotation, working oil in the torque converter 40 is circulated sequentially from the outer circumference side of the pump impeller 41 to the turbine impeller 42 and to the stator impeller 43, whose rotation is restricted by the free wheel 47. Thereafter, the working oil is circulated to return to the inner circumference side of the pump impeller 41, whereby the rotational torque of the pump impeller 41 is transmitted to the turbine impeller 42. Therefore, the turbine shaft 48, which is integral with the turbine impeller 42, and the primary speed-reduction drive gear 48a, which is integral with the turbine shaft 48, are driven to rotate. When the rotational speed of the turbine impeller 42 is increased to approach the speed of the pump impeller 41, the free wheel 47 causes the stator impeller 43 to rotate idly. The impellers 41, 42, and 43 are rotated as one body while keeping a high efficiency as a fluid coupling. Thus, the torque converter 40 displays automatic speed change function.

When the back load at the time of speed-reduction is inputted from the side of the power transmission mechanism 12 to the turbine shaft 48 through the primary speed-reduction mechanism, the rotational torque is transmitted directly to the pump impeller 41 through the side cover 50 due to the engagement of the free wheel 51. The rotation of the outer boss portion 36 integral with the pump impeller 41 is transmitted through the one-way clutch 38 to the crankshaft 15 to act as an engine brake.

A cam chain drive sprocket 56 around which a cam chain 55 is to be wrapped is provided at a left side portion, projecting leftwards from the left crankcase 13L, of the crankshaft 15. A large diameter gear 85a connected to a cell motor, which will be described later, and a one-way clutch 87 are provided on the outside of the cam chain drive sprocket 56. Further, an AC generator 60 is provided on the outside of the one-way clutch 87. The one-way clutch 87 and an outer rotor 61 of the AC generator 60 are both connected to a holding member 59. The holding member 59 is fitted over the left end portion of the crankshaft 15 through a key 58, and is fixed to the crankshaft 15 with a bolt 65 screwed to the left end of the crankshaft 15, with a boss member 65 interposed therebetween. A left crankcase cover 14L is joined to the left end surface of the left crankcase half 13L to cover the AC generator 60 from the left side.

The left crankcase cover 14L is provided with an opening 63 at a portion opposed to a shaft end of the crankshaft 15, and an inner stator 62 of the AC generator 60 is supported on the circumferential edge portion of the opening 63. Therefore, the AC generator 60 is so configured that the inner stator 62 is fixedly supported on the left crankcase half 13L through the left crankcase cover 14L, and the outer rotor 61 is rotated as one body with the crankshaft 15. A boss member 65 fixes the outer rotor 61 at the left end of the crankshaft 15 and has an end portion that passes through the opening 63 in the left crankcase cover 14L and protrudes to the outside. At the protruding end portion, annular ratchet teeth 65a relating to a kick-type starter 70 to be described later, project to the left side. The kick-type starter 70 is provided on the left side relative to the AC generator 60 and on the outer side of the left crankcase cover 14L.

Fig. 3 shows an outlook view, as viewed from the left side, of the internal combustion engine. The cylinder head 20 and the cylinder block 17 are shown on the left side in the figure (at a front portion of the internal combustion engine), while the position of the output shaft 26, the position of the rear wheel chain drive sprocket 26b, the rear wheel drive chain 27, and the rear cover 39 are shown on the right side in the figure (on the rear side of the internal combustion engine). The rear wheel chain drive sprocket 26b and a portion, in the vicinity of the sprocket 26b, of the rear wheel drive chain 27 wrapped around the sprocket 26b are covered with the rear cover 39. A kick arm 79 extends rearwards from a kick shaft 76 located at a central portion of the figure, and is provided with a kick pedal 79a at the tip end thereof. The kick arm 79 turns together with the kick shaft 76. A gear device connected to the kick shaft 76 is covered with a kick-type starter cover 71. A part of the cell motor 81 is seen at an upper portion of the internal combustion engine 10. The left crankcase half 13L and the left crankcase cover 14L are seen in this figure.

Fig. 4 shows a view, as seen from the left side, of the internal combustion engine in a condition where the kick arm 79, the kick pedal 79a, and the kick-type starter cover 71 are removed so that the internal devices of the kick-type starter can be seen. In the figure, the portion 14j shaded with dots is a mating surface provided at an end face of the left crankcase cover 14L for mating with the kick-type starter cover 71. The internal devices of the kick-type starter are provided on the outside of the left crankcase cover 14L. The kick shaft 76 is provided with a sectorial drive helical gear 77, which is turned as one body with the kick shaft 76. A return spring 78 is provided to act on the drive helical gear 77 and has a supporting point thereof on a part of the kick-type starter cover 71. The drive helical gear 77 is meshed with a driven helical gear 73 provided on a ratchet shaft 72 disposed adjacently thereto. Transmission of the kick starting force from the driven helical gear 73 to the crankshaft 15 will be described later.

Fig. 5 shows a view, as seen from the left side, of the internal combustion engine in a condition where the internal devices of the kick-type starter, the left crankcase cover 14L, and the AC generator 60 are further removed so that a starting force transmission mechanism of a cell-type starter 80 ranging from the cell motor 81 to the crankshaft 15 can be seen. In the figure, the portion 13j shaded with dots is a mating surface provided at an end face of the left crankcase half 13L for mating with the left crankcase cover 14L. A motor rotary shaft 82 of the cell motor 81 is provided with a pinion 82a, which is meshed with a large diameter gear 84a of a double gear 84 mounted on an intermediate shaft 83. A hollow cylindrical boss 85 is rotatably fitted over the crankshaft 15 through a roller bearing 86, and an outer circumferential portion thereof is integrally provided with the large diameter gear 85a. The double gear 84 has a small diameter gear 84b which is in mesh with the large diameter gear 85a on the hollow cylindrical boss 85. Transmission of power from the hollow cylindrical boss 85 to the crankshaft 15 will be described later.

Fig. 6 shows a drive force transmission mechanism for transmitting drive force from the kick-type starter 70 and the cell-type starter 80 to the crankshaft 15. The section of the kick-type starter 70 corresponds to A-A section of Fig. 3 and B-B section of Fig. 4, while the section of the cell-type starter 80 corresponds to C-C section of Fig. 5.

The kick-type starter cover 71 is joined to the left end surface of the left crankcase cover 14L in the state of covering the drive force transmission mechanism of the kick-type starter 70. A hollow cylindrical support portion 71a projects coaxially with the crankshaft 15 on the inside surface of the kick-type starter cover 71 on the extension of the centerline of the crankshaft 15. The ratchet shaft 72 is inserted in and supported by the hollow cylindrical support portion 71a so as to be turnable and slidable in the axial direction. The ratchet shaft 72 is provided with the driven helical gear 73 on a central exposed portion thereof, and a ratchet wheel 74 is attached to the right end of the ratchet shaft 72. Ratchet teeth 74a are formed at an annular end portion of the ratchet wheel 74, projecting to the right side, and are opposed to the ratchet teeth 65a of the boss member 65 fixed to the left end of the crankshaft 15.

A friction spring 75 is interposed between the kick-type starter cover 71 and the ratchet wheel 74 and biases the ratchet wheel 74 and the ratchet shaft 72 leftwards. When the ratchet wheel 74 is moved rightwards against the force of the friction spring 75, the ratchet teeth 74a of the ratchet wheel 74 come into mesh with the ratchet teeth 65a of the boss member 65.

A bearing boss portion 71b bulges inwards from the inside surface of the kick-type starter cover 71 at a position slightly spaced from the hollow cylindrical support portion 71a, and a kick shaft 76 penetrates through and is turnably supported by the bearing boss portion 71b. The left end of the kick shaft 76 projects leftwards to the exterior, and the right end of the kick shaft 76 is turnably fitted in the left crankcase cover 14L. The sectorial drive helical gear 77 shown in Fig. 4 is integrally fitted to the kick shaft 76, and is biased in one rotating direction by the return spring 78. The drive helical gear 77 is in mesh with the helical gear 73 on the ratchet wheel 72. The base end portion of the kick arm 79 is attached to the left end of the kick shaft 76 so that the kick arm 79 can be swung vertically. The kick pedal 79a is attached to the tip end of the kick arm 79.

Therefore, when the kick pedal 79a is depressed and the kick shaft 76 is rotated against the return spring 78, the drive helical gear 77 is rotated as one body with the kick shaft 76. The driven helical gear 73 meshed with the drive helical gear 77 is slid rightwards against the friction spring 75 while rotating together with the ratchet shaft 72. The ratchet teeth 74a of the ratchet wheel 74 are meshed with the ratchet teeth 65a of the boss member 65 on the side of the crankshaft 15, whereby the crankshaft 15 is forcedly rotated, and the internal combustion engine 10 is started. The rotational torque of the crankshaft 15 arising from the depression of the kick pedal 79a at the time of starting is transmitted at a low rotating speed, so that the rotational torque rotates only the clutch inner member of the centrifugal clutch 30 and is not transmitted to the clutch outer member and the downstream power transmission system. Therefore, the starting operation is light and easy to carry out.

In Figs. 4 and 6, the cell motor 81 is mounted on the upper side of the crankshaft 15, a reduced diameter portion 81a at the left end of the cell motor 80 is fitted in a through-hole formed in the left crankcase half 13L, and the motor rotary shaft 82 projecting from the left end of the cell motor 81 extends into the space between the left crankcase half 13L and the left crankcase cover 14L. The motor rotary shaft 82 is provided with the pinion 82a on the left end portion thereof.

The intermediate shaft 83 is rotatably disposed in a bridging manner between the left crankcase half 13L and the left crankcase cover 14L at a position between the pinion 82a and the crankshaft 15, and the double gear 84 having the large diameter gear 84a and the small diameter gear 84b formed in integral combination is attached to the intermediate shaft 83. The large diameter gear 84a is in mesh with the pinion 82a.

The hollow cylindrical boss 85 provided with the large diameter gear 85a at an end portion thereof is rotatably fitted over the crankshaft 15 through the roller bearing 86. The large diameter gear 85a is in mesh with the small diameter gear 84b of the double gear 84. The one-way clutch 87 is provided at the outer circumference of the hollow cylindrical boss 85. An outer race of the one-way clutch 87 is connected to the holding member 59 by means of bolts 88. The holding member 59 is fixed to the crankshaft 15 through the key 58. The one-way clutch 87 is so configured that it can transmit the rotation of the large diameter gear 85a to the holding member 59 but cannot transmit the rotation of the holding member 59 to the large diameter gear 85a. The outer rotor 61 of the AC generator 60 is also connected to the holding member 59. When a switch of the cell motor 81 is turned ON, the rotational drive force of the cell motor 81 is transmitted through the pinion 82a, the double gear 84, the large diameter gear 85a, the one-way clutch 87, and the holding member 59 to the crankshaft 15, whereby the crankshaft 15 is rotated and the internal combustion engine is started.

The power transmission system as described above is a normally meshing system. The one-way clutch 87 is mounted for preventing the power from being transmitted reversely from the internal combustion engine to the cell motor 81 after the starting of the internal combustion engine. The one-way clutch 87 is configured such that rollers and a spring are inserted in wedge-shaped grooves provided in an outer race attached to the outer circumference of the hollow cylindrical boss 85, and the one-way power transmission action is generated by the rollers and the spring between the hollow cylindrical boss 85 and the outer race.

The internal combustion engine according to the present invention is configured as described above. The conventional kick-type starter has had the problem that the degree of freedom in layout of the kick shaft is restricted, due to the need for avoiding the interference of the kick shaft with the power transmission mechanism. In this embodiment of the invention, in contrast, the kick-type starter is provided on the outside of the crankcase cover, so that the kick-type starter does not interfere with the accessories and the power transmission mechanism located inside the crankcase cover, and component members of the kick-type starter can be freely laid out at such positions as to permit easy operation of the kick-type starter by the driver.

In addition, the internal combustion engine according to this embodiment is an internal combustion engine including both the kick-type starter and the cell-type starter. The internal combustion engine can be changed in specifications to the type including only the cell-type starter by removing the kick-type starter. Fig. 7 is a longitudinal sectional view of a part of Fig. 2, showing the specifications in which the kick-type starter is removed. Where the kick-type starter is removed, a left crankcase cover 90 for exclusive use in the case of removing the kick-type starter shown in Fig. 7 is mounted to cover the AC generator 60, the one-way clutch 87, the large diameter gear 85a, and so on. For this reason, portion or portions to be changed due to changes in specifications can be minimized. In this case, no needless space is left in the case, and the internal combustion engine as a whole can therefore be made compact, as contrasted to the case where the kick-type starter is provided in the gear chamber of the power transmission mechanism 12 inside the crankcase.

Further, in the internal combustion engine according to this embodiment, the kick-type starter 70 can be provided at such a position that the kick-type starter 70 overlaps partly with the rear cover 39. Therefore, it is possible to enhance the degree of freedom in layout of the kick-type starter 70.

In addition, since the torque converter and the kick-type starter are provided on the opposite sides in the left-right direction of the motorcycle, the left-right balance of the internal combustion engine can be made favorable. Furthermore, since the AC generator 60 is provided at the crankshaft end portion on the opposite side of the torque converter 40, oil passages can be arranged concentratedly on the side of the torque converter 40, and it is needless to lay out the oil passages in a complicated way.

## Claims

1. An internal combustion engine comprising a crankshaft (15) rotatably supported in a crankcase (13L,13R), an output shaft (26), a power transmission mechanism (12) for transmitting power from the crankshaft (15) to the output shaft (26), a crankcase cover (14L,14R) for covering a part of the power transmission mechanism (12) and accessories (60) fixed to the crankshaft (15), and a kick-type starter (70) connected to the crankshaft (15) for transmission of rotational torque to the crankshaft (15) to rotate the same when the engine is to be started, **characterized in that**:
said kick-type starter (70) is supported on an outside of the crankcase cover (14L), a torque converter (40) is provided on one end of the crankshaft (15), and said kick-type starter (70) is provided on the side opposite the one end of the crankshaft (15),
a kick-type starter cover (71) is removably fixed to an outer surface of the crankcase cover (14L) and supports therein a kick shaft (76) to be rotated by a kick arm (79) and a ratchet shaft (72) extending parallel to the kick shaft (76), said kick shaft (76) having a drive gear (77) thereon and said ratchet shaft (72) having thereon a driven gear (73) in mesh with the drive gear (77) whereby rotation of the kick shaft, (76) is transmitted to the ratchet shaft (72), and
the ratchet shaft (72) is provided to transmit rotation thereof to the crankshaft (15).

2. The internal combustion engine according to claim 1, wherein the kick shaft (76) to be rotated by the kick arm (79) is rotatably supported by and between the kick-type starter cover (71) and the crankcase cover (14L).

3. The internal combustion engine according to claims 1 or 2, wherein the drive gear (77) is a helical sear and the driven gear (73) is also a helical gear, and wherein the ratchet shaft (72) is provided to transmit rotation thereof to the crankshaft, (15) in such a manner that the ratchet shaft (72) is shifted to mesh with the crankshaft (15) when the drive helical gear (77) of the kick shaft (76) drives in rotation the driven helical gear (73) of the ratchet shaft (72).

4. The internal combustion engine according to claims 1, 2 or 3, wherein the ratchet shaft (72) is biased by a spring (75) away from the crankshaft (15), the ratchet shaft (72) having ratchet teeth (74a) and the crankshaft (15) having ratchet teeth (65a), said ratchet shaft (72) being adapted to be shifted toward the crankshaft (15) when the drive helical gear (77) drives the driven helical gear (73) to cause the ratchet teeth (65a) of the ratchet shaft (72) to mesh with the ratchet teeth (65a) of the crankshaft (15).

5. The internal combustion engine according to claims 1, 2 or 3, wherein said internal combustion engine (10) mounted on a motorcycle (1), said kick-type starter (70) is provided at such a position that, as viewed sideways with respect to the motorcycle (1), the kick-type starter (70) overlaps partly with a rear cover (39) of the internal combustion engine (10) for covering a front portion of a chain (27) connecting said output shaft (26) of the internal combustion engine (10) and a rear wheel (6) of the motorcycle (1) to each other and for covering a drive sprocket (26b) of the output shaft (26).

## Patentansprüche

1. Verbrennungsmotor, umfassend eine in einem Kurbelgehäuse (13L, 13R) drehbar gelagerte Kurbelwelle (15), eine Ausgangswelle (26), einen Kraftübertragungsmechanismus (12) zur Kraftübertragung von der Kurbelwelle (15) auf die Ausgangswelle (26), eine Kurbelgehäuseabdeckung (14L, 14R) zum Abdecken eines Teils des Kraftübertragungsmechanismus (12) und von an der Kurbelwelle (15) befestigten Hilfseinrichtungen (60), sowie einen Kickstarter (70), der mit der Kurbelwelle (15) verbunden ist, zur Drehmomentübertragung auf die Kurbelwelle (15), um diese zu drehen, wenn der Motor gestartet werden soll, **dadurch gekennzeichnet, dass**:
der Kickstarter (70) an einer Außenseite der Kurbelgehäuseabdeckung (14L) gelagert ist, ein Drehmomentwandler (40) am einen Ende der Kurbelwelle (15) vorgesehen ist und der Kickstarter (70) an der dem einen Ende der Kurbelwelle (15) entgegengesetzten Seite vorgesehen ist,
eine Kickstarterabdeckung (71) an einer Außenoberfläche der Kurbelgehäuseabdeckung (14L) lösbar befestigt ist und darin eine von einem Kickhebel (79) zu drehende Kickwelle (76) und eine sich parallel zur Kickwelle (76) erstreckende Klinkenwelle (72) trägt, wobei an der Kickwelle (76) ein Antriebszahnrad (77) vorgesehen ist und an der Klinkenwelle (72) ein angetriebenes Zahnrad (73) in Eingriff mit dem Antriebszahnrad (77) vorgesehen ist, wodurch die Drehung der Kickwelle (76) auf die Klinkenwelle (72) übertragen wird, und
die Klinkenwelle (72) vorgesehen ist, um deren Drehung auf die Kurbelwelle (15) zu übertragen.

2. Der Verbrennungsmotor nach Anspruch 1, worin die von dem Kickarm (79) zu drehende Kickwelle (76) an und zwischen der Kickstarterabdeckung (71) und der Kurbelgehäuseabdeckung (14L) drehbar gelagert ist.

3. Der Verbrennungsmotor nach Anspruch 1 oder 2, worin das Antriebszahnrad (77) ein Schneckenzahnrad ist und das angetriebene Zahnrad (73) auch ein Schneckenzahnrad ist, und worin die Klinkenwelle (72) vorgesehen ist, um deren Drehung auf die Kurbelwelle (15) derart zu übertragen, dass die Klinkenwelle (72) zum Eingriff mit der Kurbelwelle (15) verschoben wird, wenn das Antriebsschneckenzahnrad (77) der Kickwelle (76) das angetriebene Schneckenzahnrad (73) der Klinkenwelle (72) drehend antreibt.

4. Der Verbrennungsmotor nach Anspruch 1, 2 oder 3, worin die Klinkenwelle (72) durch eine Feder (75) von der Kurbelwelle (15) weg vorgespannt ist, wobei die Klinkenwelle (72) eine Klinkenverzahnung (74a) aufweist und die Kurbelwelle (15) eine Klinkenverzahnung (65a) aufweist, wobei die Klinkenwelle (72) dazu ausgelegt ist, zu der Kurbelwelle (15) hin verschoben zu werden, wenn das Antriebsschneckenzahnrad (77) das angetriebene Schneckenzahnrad (73) antreibt, um zu bewirken, dass die Klinkenverzahnung (65a) mit der Klinkenwelle (72) mit der Klinkenverzahnung (65a) der Kurbelwelle (15) in Eingriff gelangt.

5. Der Verbrennungsmotor nach Anspruch 1, 2 oder 3, worin der Verbrennungsmotor (10) an einem Kraftrad (1) angebracht ist, wobei der Kickstarter (70) an einer derartigen Position vorgesehen ist, dass, bei seitlicher Betrachtung in Bezug auf das Kraftrad (1), der Kickstarter (70) eine hintere Abdeckung (39) des Verbrennungsmotors (10) teilweise überlappt, um einen vorderen Abschnitt einer Kette (27) abzudecken, die die Ausgangswelle (26) des Verbrennungsmotors (10) mit einem Hinterrad (6) des Kraftrads (10) verbindet, und um ein Antriebsritzel (26b) der Ausgangswelle (26) abzudecken.

## Revendications

1. Moteur à combustion interne comprenant un vilebrequin (15) supporté de façon rotative dans un carter de moteur (13L, 13R), un arbre de sortie (26), un mécanisme de transmission de puissance (12) pour transmettre une puissance du vilebrequin (15) à l'arbre de sortie (26), un couvercle de carter de moteur (14L, 14R) pour recouvrir une partie du mécanisme de transmission de puissance (12) et des accessoires (60) fixés au vilebrequin (15), et un démarreur à pied (70) relié au vilebrequin (15) pour la transmission de couple de rotation au vilebrequin (15) pour le faire tourner lorsque le moteur doit être démarré, **caractérisé en ce que**:
ledit démarreur à pied (70) est supporté sur un extérieur du couvercle de carter de moteur (14L), un convertisseur de couple (40) est prévu sur une première extrémité du vilebrequin (15), et ledit démarreur à pied (70) est prévu sur le côté opposé à la première extrémité du vilebrequin (15),
un couvercle de démarreur à pied (71) est fixé de façon amovible à une surface extérieure du couvercle de carter de moteur (14L) et supporte dans celui-ci un arbre de démarreur à pied (76) destiné à être tourné par un bras de démarreur à pied (79) et un arbre à rochet (72) s'étendant parallèlement à l'arbre de démarreur à pied (76), ledit arbre de démarreur à pied (76) comportant un engrenage d'entraînement (77) sur celui-ci et ledit arbre à rochet (72) comportant sur celui-ci un engrenage entraîné (73) en engrènement avec l'engrenage d'entraînement (77), moyennant quoi la rotation de l'arbre de démarreur à pied (76) est transmise à l'arbre à rochet (72), et
l'arbre à rochet (72) est prévu pour transmettre sa rotation au vilebrequin (15).

2. Moteur à combustion interne selon la revendication 1, dans lequel l'arbre de démarreur à pied (76) destiné à être tourné par le bras de démarreur à pied (79) est supporté de façon rotative par et entre le couvercle de démarreur à pied (71) et le couvercle de carter de moteur (14L) .

3. Moteur à combustion interne selon les revendications 1 ou 2, dans lequel l'engrenage d'entraînement (77) est un engrenage hélicoïdal et l'engrenage entraîné (73) est également un engrenage hélicoïdal, et dans lequel l'arbre à rochet (72) est prévu pour transmettre sa rotation au vilebrequin (15) de manière telle que l'arbre à rochet (72) soit déplacé pour s'engrener avec le vilebrequin (15) lorsque l'engrenage hélicoïdal d'entraînement (77) de l'arbre de démarreur à pied (76) entraîne en rotation l'engrenage hélicoïdal entraîné (73) de l'arbre à rochet (72).

4. Moteur à combustion interne selon les revendications 1, 2 ou 3, dans lequel l'arbre à rochet (72) est sollicité par un ressort (75) pour être éloigné du vilebrequin (15), l'arbre à rochet (72) comportant des dents à rochet (74a) et le vilebrequin (15) comportant des dents à rochet (65a), ledit arbre à rochet (72) étant adapté pour être déplacé vers le vilebrequin (15) lorsque l'engrenage hélicoïdal d'entraînement (77) entraîne l'engrenage hélicoïdal entraîné (73) pour entraîner l'engrènement des dents à rochet (65a) de l'arbre à rochet (72) avec les dents à rochet (65a) du vilebrequin (15).

5. Moteur à combustion interne selon les revendications 1, 2 ou 3, dans lequel ledit moteur à combustion interne (10) est monté sur un motocycle (1), ledit démarreur à pied (70) est prévu dans une position telle que, en vue latérale par rapport au motocycle (1), le démarreur à pied (70) chevauche partiellement un couvercle arrière (39) du moteur à combustion interne (10) pour recouvrir une partie avant d'une chaîne (27) reliant ledit arbre de sortie (26) du moteur à combustion interne (10) et une roue arrière (6) du motocycle (1) l'une à l'autre et pour recouvrir une roue dentée d'entraînement (26b) de l'arbre de sortie (26).
